**Europäisches Patentamt**

**European Patent Office**

**Office européen des brevets**

(19)

(11) **EP 1 324 053 A1**

(12) **EUROPÄISCHE PATENTANMELDUNG**

(43) Veröffentlichungstag:
02.07.2003 Patentblatt 2003/27

(51) Int Cl.⁷: $G01P\ 21/00$, $B60G\ 17/015$

(21) Anmeldenummer: 02024649.2

(22) Anmeldetag: 05.11.2002

(84) Benannte Vertragsstaaten:
**AT BE BG CH CY CZ DE DK EE ES FI FR GB GR IE IT LI LU MC NL PT SE SK TR**
Benannte Erstreckungsstaaten:
**AL LT LV MK RO SI**

(30) Priorität: **24.12.2001 DE 10164108**

(71) Anmelder: **WABCO GmbH & CO. OHG**
**30453 Hannover (DE)**

(72) Erfinder:
• **Bolzmann, Oliver**
**30161 Hannover (DE)**
• **Koschorek, Ralf**
**30449 Hannover (DE)**

(74) Vertreter: **Schrödter, Manfred**
**WABCO GmbH & Co. OHG,**
**Postfach 91 12 62**
**30432 Hannover (DE)**

(54) **Verfahren für die Funktionsprüfung eines Querbeschleunigungssensor**

(57) Es wird ein Verfahren zur Funktionsprüfung eines in einem Fahrzeug mit Fahrdynamikregelung eingebauten Querbeschleunigungssensors vorgeschlagen. Statt den Sensor im Rahmen einer dynamischen Beschleunigungs-Beaufschlagung durch eine Kurvenfahrt zu überprüfen, wird der Sensor durch die statisch wirkende Erdbeschleunigung überprüft, indem das Fahrzeug auf eine Querrampe mit bekanntem Neigungswinkel verbracht wird und die vom Querbeschleunigungssensor gemessene Beschleunigungskraft mit einem Sensor-Vorgabewert verglichen wird, welcher aufgrund des Neigungswinkels der Querrampe bestimmt ist. Der Vergleich erfolgt nach Betrag und Vorzeichen, so daß im Rahmen eines Fehlerprotokolls auch auf die Ursache eines möglichen fehlerhaften Einbaus geschlossen werden kann.

Fig. 1

**Beschreibung**

Die Erfindung betrifft ein Verfahren für die Funktionsprüfung eines Querbeschleunigungssensors in einem mit einer Fahrdynamikregelung ausgerüsteten Fahrzeug.

Aus der DE 199 36 596 C1 ist bekannt, die Funktionsprüfung einer Fahrdynamikregelsensorik, bestehend aus einem Gierratensensor, einem Querbeschleunigungssensor und/oder einem Lenkwinkelsensor, im Rahmen einer Prüffahrt, die das Durchfahren einer Kurve mit vorgegebener Längsgeschwindigkeit beinhaltet, festzustellen. Hierzu werden beim Beginn eines Prüfvorganges zunächst die in diesem Moment vorliegenden Meßsignalwerte der Fahrdynamikregelsensorik als entsprechende Startwerte erfaßt. Dann werden während der Prüffahrt des Fahrzeugs, die unter vorgegebenen Prüffahrtbedingungen stattfindet, die von der Fahrdynamikregelungs-Elektronik laufend gelieferten Meßsignalwerte mit den zugehörigen Startwerten verglichen. Insbesonders sind dies diejenigen Werte, die beim Durchfahren der Kurve mit einer in einem vorgebbaren Geschwindigkeitsbereich liegenden Fahrzeuglängsgeschwindigkeit geliefert werden. Für eine solche Fahrsituation liegen die Meßsignale der betreffenden Sensoren im fehlerfreien Fall innerhalb charakteristischer Bereiche. Mit der anschließenden Auswertung der Vergleichsergebnisse der während der Prüffahrt gelieferten Meßsignale mit den zugehörigen Startwerten wird erkannt, ob die Fahrdynamikregelungssensorik fehlerfrei arbeitet.

Für die Anwendung des Verfahrens nach der DE 199 36 596 C1 ist also eine Kurvenfahrt unter bestimmten Bedingungen erforderlich, was problematisch ist, wenn die Prüfung direkt im Anschluß an die Fertigung des Fahrzeugs am Band im Rahmen der Bandende-Kontrolle erfolgen soll. An den Fertigungsstätten selbst ist oft der für die Kurvenfahrt erforderliche Platz nicht vorhanden, und es ist auch nachteilhaft, Fahrmanöver auf dem Hof fest vorzuschreiben: Durch verschiedene Witterungen gibt es unter Umständen niedrige Reibwerte durch z. B. Eis und Schnee, was zu Instabilitäten des Fahrzeugs führt, die das Meßergebnis einer Kurvenfahrt verfälschen und so zu einer falschen Fehlererkennung führen. Im Zuge einer Serienfertigung kann dies zu Problemen führen, weil dadurch eine Verzögerung des Fertigungsprozesses entsteht, was dann unmittelbar zu zusätzlichen Kosten führt.

Um solche Effekte zu berücksichtigen, müßten die Fehlergrenzen aufgeweitet werden, was aber dann wieder die Erkennungsmöglichkeit vermindert.

Der Erfindung liegt also die Aufgabe zugrunde, ein Funktions-Prüfungsverfahren für einen Querbeschleunigungssensor anzugeben, das auf engstem Raum innerhalb eines Gebäudes durchgeführt werden kann.

Diese Aufgabe wird durch die im Patentanspruch 1 angegebene Erfindung gelöst; Weiterbildungen und vorteilhafte Ausführungsbeispiele der Erfindung sind in den Unteransprüchen angegeben.

Die Erfindung hat den Vorteil, daß mit ihrer Anwendung das gesamte Prüfungsverfahren erheblich vereinfacht wird.

Eine Weiterbildung der Erfindung hat den Vorteil, daß über Diagnosemittel eine automatische Protokollierung erfolgt; diese Diagnosemittel sind entsprechend einer anderen Weiterbildung der Erfindung in einen ohnehin bereits vorhandenen elektronischen Fahrdynamikregler integriert und damit besonders kostengünstig zu realisieren.

Die Erfindung wird im folgenden anhand eines Ausführungsbeispiels, das in der Zeichnung dargestellt ist, näher erläutert.

Es zeigt:

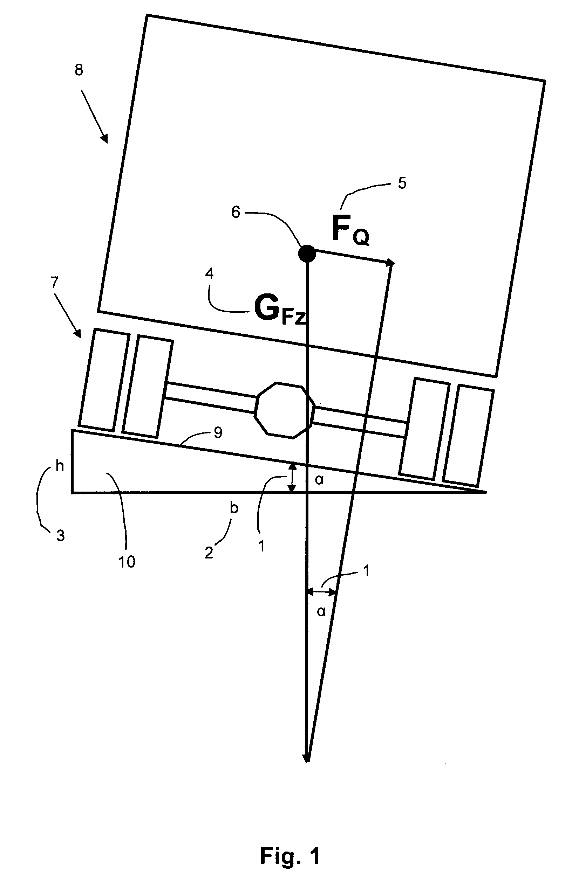

Fig. 1    Ein im Verlauf der Funktionsprüfung auf einer Rampe befindliches Fahrzeug mit der auf einen im Fahrzeug-Schwerpunkt montierten Querbeschleunigungssensor einwirkenden Kraft.

Eine elektronische Fahrdynamikregelung dient vor allem dazu, querdynamisch kritische Fahrsituationen zu beherrschen. Zu diesem Zweck werden von der Fahrdynamik-Regelelektronik über Sensoren der Lenkrad-Drehwinkel, der angibt, wohin der Fahrer das Fahrzeug zu steuern beabsichtigt, die Drehrate, die angibt, wie schnell sich das Fahrzeug gegenwärtig dreht, und die Querbeschleunigung, welche die aufgrund des Reibwertes mögliche Kraftübertragung beschreibt, erfaßt. Aufgrund dieser Informationen stellt die Regelelektronik fest, ob das Fahrzeug den Lenkvorgaben folgt oder ob aufgrund der derzeitigen Kurvengeschwindigkeit ein Über- oder ein Untersteuern stattfindet. Wird ein Fehlverhalten durch Über- oder Untersteuern festgestellt, so werden bestimmte Räder eingebremst, die diesem Fehlverhalten und damit der Einnahme einer Fahrer und Fahrzeug gefährdenden kritischen Fahrsituation entgegenwirken.

Fig. 1 zeigt ein Fahrzeug, dargestellt in Prinzipdarstellung, also einen Fahrzeugaufbau (8), der sich über Fahrzeugachsen (7) abstützt, welche sich auf einer Querrampe (10) mit einem Neigungswinkel $\alpha$ (1) befindet, wobei die Fahrzeugachsen (7) auf der geneigten Oberfläche (9) der Querrampe (10) aufliegen. Aufgrund der Geometrie der Querrampe (10) bestimmt sich der Neigungswinkel $\alpha$ (1) aus der Breite b (2) [festgelegt durch die Fahrzeug-Spurweite von z. B. 2,05 m] und der Höhe h (3) [z. B. 0,25 m] nach folgendem Zusammenhang:

$$\alpha = \arc \tan \frac{h}{b} \qquad [1]$$

Der Querbeschleunigungssensor [z. B. SCA 320 Accelerometer der Firma VTI Hamlin] ist im Fahrzeugschwerpunkt (6) angeordnet, so daß die Gewichtskraft G$_{Fz}$ (4) an diesem Punkt angreift. Durch die Schrägstellung des Fahrzeugs wirkt auf den Querbeschleunigungssensor in seiner Meßrichtung, parallel zu einer Fahrzeugachse, eine Teilkomponente der Gewichtskraft G$_{Fz}$ (4) ein, nämlich die als Querbeschleunigungskraft wirkende Kraft F$_Q$ (5). Nach dem Gesetz des Parallelogramms der Kräfte ergibt sich die Kraft F$_Q$ (5) nach dem trigonometrischen Zusammenhang:

$$F_Q = G_{Fz} \cdot \sin\alpha \qquad [2]$$

Mit der Endbeschleunigung g=9,81$\frac{m}{s^2}$ und der Fahrzeugmasse m$_{Fz}$ bestimmt sich die Kraft F$_Q$ zu

$$F_Q = g \cdot m_{Fz} \cdot \sin\alpha \qquad [3]$$

und es wird ein diesem Neigungswinkel entsprechender Sensor-Vorgabewert b$_v$ nach folgendem Zusammenhang rechnerisch festgelegt:

$$b_v = g \cdot \sin\alpha \qquad [4]$$

Der aufgrund von Formel [4] bestimmte Sensor-Vorgabewert dient nun als Vergleichswert für die Funktionsprüfung des Querbeschleunigungssensors.

Entsprechend der Erkenntnis der Erfindung wird also mit dem Sensor-Vorgabewert b$_v$ nach [4] durch die statisch wirkende Erdbeschleunigung g, die für eine bestimmte Kurvenfahrt [Kurvenradius und Fahrzeuggeschwindigkeit] geltende, dynamisch wirkende Zentrifugalbeschleunigung b$_{dyn}$ simuliert; statt b$_{dyn}$ in der Kurvenfahrt zu ermitteln, wird bei stehendem Fahrzeug gemessen und das Meßergebnis mit b$_v$ nach [4] verglichen, was das gesamte Prüfungsverfahren erheblich vereinfacht.

Diese Simulation durch die Erdbeschleunigung stellt den Kern der Erfindung dar: Neben der gezeigten Querrampe (10) kann die Lage des Fahrzeugs auch mit anderen Mitteln- z. B. einer hydraulisch betätigten Hebevorrichtung, welche das Fahrzeug durch Anheben auf einer Seite schräg stellt, in eine Schräglage versetzt werden; alle Mittel, die das Fahrzeug in eine Lage versetzen, bei der die auf den Querbeschleunigungssensor wirkende Erdbeschleunigung eine Kurvenfahrt simuliert, werden im Sinne der Erfindung als zur Querrampe (10) äquivalente Mittel betrachtet.

Nach der Fertigstellung des Fahrzeugs am Band befindet sich dieses zunächst auf dem ebenen Boden der Fertigungshalle in Geradeausrichtung. In einem ersten Schritt wird dort der Sensor-Meßwert eingelesen.

In dieser Stellung wird zunächst der Offset, d. h. der Sensor-Meßwert bei der in dieser Stellung geltenden Einwirkung einer Querbeschleunigungskraft von Null ermittelt. Dieser Offset wird in einem zweiten Schritt korrigiert, d. h. er wird im folgenden von allen gemessenen Sensor-Meßwerten abgezogen bzw. zu diesen addiert. Zur folgenden Funktionsprüfung werden also ausschließlich korrigierte, d. h. Offset-bereinigte Sensor-Meßwerte verwendet.

In einem dritten Schritt wird das Fahrzeug dann auf die oben erläuterte Querrampe (10) derart gefahren, daß alle Achsen (7) auf der geneigten Oberfläche (9) aufliegen. Alternativ zum Fahren kann das Fahrzeug auch z. B. über eine Seilzug-Einrichtung in die Querrampe (10) verbracht werden, wenn im Verlauf der Funktionsprüfung der Fahrzeugmotor nicht gestartet werden soll.

Dann wird in einem vierten Schritt der Sensor-Meßwert erneut eingelesen und in einem fünften Schritt wird anschließend geprüft, ob der von dem Querbeschleunigungssensor ermittelte Sensor-Meßwert nach Betrag und Vorzeichen gleich dem Sensor-Vorgabewert nach Formel [4] ist.

Entspricht die festgestellte Querbeschleunigung nach Betrag und Vorzeichen dem Sensor-Vorgabewert, so ist erkannt, daß der Beschleunigungssensor funktionsfähig eingebaut ist. Entspricht dagegen die in der Schräge festgestellte Querbeschleunigung nach Betrag und Vorzeichen nicht dem Sensor-Vorgabewert, so ist erkannt, daß der eingebaute Querbeschleunigungssensor nicht funktionsfähig ist. Die Prüfung auf Gleichheit erfolgt vorteilhafterweise durch die Fahrdynamik-Regelelektronik selbst, die zu diesem Zweck mit einem Programmteil "Diagnosesoftware" ausgestattet ist.

Unter Nutzung dieser Diagnosesoftware wird dann in einem sechsten Schritt ein Protokoll erstellt, welches im Falle des funktionsfähig eingebauten Querbeschleunigungssensors die Funktionsfähigkeit bestätigt und im Falle des als nicht funktionsfähig eingebauten Querbeschleunigungsssensors die Art des Fehlers näher erläutert. Auf diese Weise ist es z. B. möglich, einen schlichten Verdrahtungsfehler zu diagnostizieren, wenn z. B. der Sensor nach Betrag richtig, aber das Vorzeichen falsch ist.

Die Ausgabe des Protokolls kann vorteilhafterweise über ein im Fahrzeug ohnehin eingebautes Onboard-Display erfolgen.

Alternativ kann, gegebenenfalls auch zusätzlich, das Protokoll über eine vom elektronischen Fahrdynamikregler angebrachte Schnittstelle an eine dort anschließbare Druckeinrichtung zur Herstellung einer Hardcopy ausgegeben werden. Auf diese Weise kann auch eine automatische Protokollierung erfolgen. Die Protokoll-Information kann über diese Schnittstelle auch - gegebenenfalls zusätzlich - an einen Fertigungsrechner zur automatischen Protokollierung weitergeleitet werden. Alternativ besteht natürlich auch die Möglichkeit, den in der Schräge vom Querbeschleunigungssensor ermittelten Sensor-Meßwert über ein Anzeige- oder Diagnose-Prüfgerät zum visuellen Vergleich anzuzeigen [Anzeige vorzugsweise in $\frac{m}{s^2}$]; dies hat jedoch den Nachteil, daß eine Automatisierung des Ablaufs weitgehend ausgeschlossen ist und damit höhere Prüfkosten entstehen.

Neben seiner Verwendung im Rahmen der Bandende-Kontrolle im Anschluß an die Fahrzeug-Fertigung kann das erfindungsgemäße Prüfverfahren auch zur Funktionsprüfung des Querbeschleunigungssensors im Rahmen einer TÜV-Hauptuntersuchung durchgeführt werden. Da die räumlichen Verhältnisse bei diesen Untersuchungen üblicherweise begrenzt sind, wirkt sich auch hier sehr vorteilhaft aus, daß der Platzbedarf zur Nutzung des erfindungsgemäßen Prüfungsverfahrens gering ist; für ein TÜV-Prüfungsverfahren bietet sich z. B. die oben erwähnte einseitig wirkende Hebevorrichtung (z. B. als Stempel an der Kolbenstange von einem oder mehreren Hydraulikzylindern) an, da derartige Hebeeinrichtungen in diesem Umfeld für andersartige Prüfungen ohnehin üblich sind.

Ergänzt sei, daß es in diesem Zusammenhang eine Vielzahl von Möglichkeiten zur Fahrzeug-Schrägstellung gibt; erwähnt sei hier die Verwendung eines Krans, von Wagenhebern oder die Nutzung einer im Fahrzeug eingebauten Luftfederung - im letzten Fall ist bei Bussen die Verwendung einer Kneeling-Vorrichtung besonders vorteilhaft.

**Patentansprüche**

1. Verfahren für die Funktionsprüfung eines Querbeschleunigungssensors, der in einem mit Fahrdynamikregelung ausgerüsteten Fahrzeug installiert und mit einem elektronischen Fahrdynamikregler verbunden ist, wobei der räumliche Bereich zur Prüfung des Fahrzeugs die folgenden Elemente aufweist:

   a) Mindestens ein Bereich mit ebener Oberfläche ist zur Simulation der Geradeausfahrt des Fahrzeugs vorgesehen;

   b) ein weiterer Bereich, in dem das Fahrzeug auf seiner ganzen Länge quer zur Fahrtrichtung mit einem vorgegebenen Neigungswinkel schräg gestellt werden kann, ist zur Simulation einer bestimmten Kurvenfahrt des Fahrzeugs vorgesehen;
   wobei das Verfahren folgenden Merkmale aufweist:

   c) Die Funktionsprüfung wird an einem fertiggestellten Fahrzeug vorgenommen;

   d) zur Ermittlung des für die Geradeausfahrt gültigen Querbeschleunigungssensor-Meßwertes wird der Sensorausgang gemessen, wenn das Fahrzeug sich im Bereich mit ebener Oberfläche befindet;

   e) zur Ermittlung des für die bestimmte Kurvenfahrt gültigen Querbeschleunigungssensor-Meßwertes wird der Sensorausgang gemessen, wenn sich das Fahrzeug in der Schrägstellung befindet;

   f) zur Funktionsprüfung des funktionsfähig eingebauten Querbeschleunigungssensors wird der für die bestimmte Kurvenfahrt gültige Querbeschleunigungssensor-Meßwert nach Betrag und Vorzeichen mit einem rechnerisch ermittelten Sensor-Vorgabewert verglichen;

   g) der Sensor-Vorgabewert entpricht derjenigen Beschleunigung, die unter Berücksichtigung des Neigungswinkels durch die Erdbeschleunigung auf den Querbeschleunigungssensor einwirkt, wenn sich das Fahrzeug in der Schrägstellung befindet.

2. Funktionsprüfungs-Verfahren nach Anspruch 1, **dadurch gekennzeichnet, daß** der Sensor-Vorgabewert aus dem bekannten Neigungswinkel der Schrägstellung bestimmt wird.

3. Funktionsprüfungs-Verfahren nach Anpruch 1 oder 2, **dadurch gekennzeichnet, daß** auf einen funktionsfähig eingebauten Querbeschleunigungssensor erkannt wird, wenn sich der Querbeschleunigungssensor-Meßwert beim Übergang des Fahrzeugs vom Bereich ebener Oberfläche zur Schrägstellung ändert und der Querbeschleunigungssensor-Meßwert nach Betrag und Vorzeichen zu dem Sensor-Vorgabewert wird, wenn das Fahrzeug die Schrägstellung mit dem vorgegebenen Neigungswinkel endgültig erreicht.

4. Funktionsprüfungs-Verfahren nach Anpruch 3, **dadurch gekennzeichnet, daß** die Prüfung durch Ablesen eines Anzeige- oder Diagnose-Prüfgerätes erfolgt, das zu diesem Zweck an den elektronischen Fahrdynamikregler angeschlossen wird.

5. Funktionsprüfungs-Verfahren nach Anpruch 3, **dadurch gekennzeichnet, daß** die Prüfung durch Ablesen eines im Fahrzeug eingebauten Onboard Display erfolgt, das über elektrische Verbindungsmittel mit dem elektronischen Fahrdynamikregler verbunden ist.

6. Funktionsprüfungs-Verfahren nach Anpruch 3, **dadurch gekennzeichnet, daß** die Prüfung von einer Diagnosesoftware durchgeführt wird, welche ein Protokoll erstellt, das im Fall des funktionsfähig eingebauten Querbeschleunigungssensors die Funktionsfähigkeit bestätigt und im Fall des nicht funktionsfähig eingebauten Querbeschleunigungssensors Hinweise auf die Art des Fehlers gibt.

**7.** Funktionsprüfungs-Verfahren nach Anspruch 6, **dadurch gekennzeichnet, daß** der Algorithmus für die Diagnosesoftware von dem elektronischen Fahrdynamikregler durchgeführt wird.

**8.** Funktionsprüfungs-Verfahren nach Anspruch 6 oder 7, **dadurch gekennzeichnet, daß** die Ausgabe des Protokolls über das im Fahrzeug eingebauten Onboard Display erfolgt.

**9.** Funktionsprüfungs-Verfahren nach Anspruch 6 oder 7, **dadurch gekennzeichnet, daß** die Ausgabe des Protokolls über eine am elektronischen Fahrdynamikregler anschließbare Hardcopy-Einrichtung erfolgt.

**10.** Funktionsprüfungs-Verfahren nach mindestens einem der Anprüche 1 bis 9, **dadurch gekennzeichnet, daß** das Prüfungsverfahren im Anschluß an die Fahrzeug-Fertigung am Band im Rahmen der Bandende-Kontrolle durchgeführt wird.

**11.** Funktionsprüfungs-Verfahren nach mindestens einem der Ansprüche 1 bis 10, **dadurch gekennzeichnet, daß** die Schrägstellung des Fahrzeugs mit Hilfe einer Querrampe mit vorgegebenem Neigungswinkel realisiert wird.

**12.** Funktionsprüfungs-Verfahren nach Anspruch 11, **dadurch gekennzeichnet, daß** im Rahmen der Bandende-Kontrolle folgende Schritte durchgeführt werden:

a) In einem ersten Schritt wird im Bereich mit ebener Oberfläche der Querbeschleunigungssensor-Meßwert in den elektronischen Fahrdynamikregler eingelesen;

b) in einem zweiten Schritt wird für den eingelesen Querbeschleunigungssensor-Meßwert eine Offset-Korrektur durchgeführt;

c) in einem dritten Schritt wird das Fahrzeug in die Querrampe verbracht;

d) in einem vierten Schritt wird der Querbeschleunigungssensor-Meßwert erneut in den elektronischen Fahrdynamikregler eingelesen;

e) in einem fünften Schritt vergleicht der elektronische Fahrdynamikregler den erneut eingelesen Querbeschleunigungssensor-Meßwert nach Betrag und Vorzeichen mit dem Sensor-Vorgabewert;

f) in einem sechsten Schritt erstellt der elektronische Fahrdynamikregler ein Protokoll.

**13.** Funktionsprüfungs-Verfahren nach mindestens einem der Anprüche 1 bis 9, **dadurch gekennzeichnet, daß** das Prüfungsverfahren im Rahmen einer TÜV-Hauptuntersuchung durchgeführt wird.

**Fig. 1**

**Europäisches Patentamt**

**EUROPÄISCHER RECHERCHENBERICHT**

Nummer der Anmeldung

EP 02 02 4649

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| Y | DE 39 03 069 A (FUJI HEAVY IND LTD) 17. August 1989 (1989-08-17) * Spalte 2, Absatz 3 - Spalte 2, Absatz 4 * * Spalte 5, Absatz 4 - Spalte 6, Absatz 1 * --- | 1-13 | G01P21/00 B60G17/015 |
| Y | DE 198 44 911 A (BOSCH GMBH ROBERT) 20. April 2000 (2000-04-20) * Spalte 2, Absatz 4 - Spalte 2, Absatz 7 * * Spalte 3, Absatz 7 - Spalte 4, Absatz 3 * * Spalte 9, Absatz 6 * * Ansprüche 1,2,6,8,20 * --- | 1-13 | |
| Y | PATENT ABSTRACTS OF JAPAN vol. 1996, no. 07, 31. Juli 1996 (1996-07-31) -& JP 08 062249 A (HINO MOTORS LTD), 8. März 1996 (1996-03-08) * Zusammenfassung * --- | 1-13 | |
| A | DD 214 934 A (STANDARDISIERUNG MESSWESEN AMT) 24. Oktober 1984 (1984-10-24) * Seite 1 * * Seite 4, Absatz 2 * --- | 1 | RECHERCHIERTE SACHGEBIETE (Int.Cl.7) G01P B60G |
| A | DE 44 04 265 A (SIEMENS AG) 17. August 1995 (1995-08-17) * Spalte 4, Absatz 5 - Spalte 5, Absatz 2 * --- | 1 | |
| A | DE 41 08 081 A (BOSCH GMBH ROBERT) 17. September 1992 (1992-09-17) * das ganze Dokument * ----- | 1 | |

Der vorliegende Recherchenbericht wurde für alle Patentansprüche erstellt

| Recherchenort | Abschlußdatum der Recherche | Prüfer |
|---|---|---|
| MÜNCHEN | 3. März 2003 | Felicetti, C |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**                    EP 02 02 4649

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

03-03-2003

| Im Recherchenbericht angeführtes Patentdokument | | Datum der Veröffentlichung | Mitglied(er) der Patentfamilie | | | Datum der Veröffentlichung |
|---|---|---|---|---|---|---|
| DE 3903069 | A | 17-08-1989 | JP | 1197163 | A | 08-08-1989 |
| | | | JP | 2654656 | B2 | 17-09-1997 |
| | | | DE | 3903069 | A1 | 17-08-1989 |
| | | | GB | 2215417 | A | 20-09-1989 |
| | | | US | 4895021 | A | 23-01-1990 |
| DE 19844911 | A | 20-04-2000 | DE | 19844911 | A1 | 20-04-2000 |
| JP 08062249 | A | 08-03-1996 | JP | 3131099 | B2 | 31-01-2001 |
| DD 214934 | A | 24-10-1984 | DD | 214934 | A1 | 24-10-1984 |
| DE 4404265 | A | 17-08-1995 | DE | 4404265 | A1 | 17-08-1995 |
| | | | AT | 193947 | T | 15-06-2000 |
| | | | WO | 9522063 | A1 | 17-08-1995 |
| | | | EP | 0744031 | A1 | 27-11-1996 |
| | | | JP | 2780064 | B2 | 23-07-1998 |
| | | | JP | 9503306 | T | 31-03-1997 |
| | | | NO | 963343 | A | 12-08-1996 |
| DE 4108081 | A | 17-09-1992 | DE | 4108081 | A1 | 17-09-1992 |

EPO FORM P0461

Für nähere Einzelheiten zu diesem Anhang : siehe Amtsblatt des Europäischen Patentamts, Nr.12/82